(19) Europäisches Patentamt
European Patent Office
Office européen des brevets

(11) EP 0 723 259 A1

(12) EUROPEAN PATENT APPLICATION

(43) Date of publication:
24.07.1996 Bulletin 1996/30

(51) Int Cl.⁶: **G11B 5/704**, G11B 5/708,
C08K 3/00, C08K 3/34,
C08K 3/36, C08K 7/18

(21) Application number: 96810028.9

(22) Date of filing: 12.01.1996

(84) Designated Contracting States:
DE GB

(30) Priority: 20.01.1995 KR 9500967

(71) Applicant: Cheil Synthetics Incorporation
Kyongsangbuk-Do (KR)

(72) Inventors:
• Tae, Kyong S.
Gumi-Si, Kyongsangbuk-Do (KR)
• Kim, Hak G.
Gumi-Si, Kyongsangbuk-Do (KR)
• Kim, Byuun G.
Susung-Ku, Daegu-Si (KR)

(74) Representative: Groner, Manfred et al
Isler & Pedrazzini AG,
Patentanwälte,
Postfach 6940
CH-8023 Zürich (CH)

(54) **Biaxially oriented polyester films for magnetic recording media**

(57) A biaxially oriented polyester film superior in abrasion resistance, slip property and surface roughness and suitable for magnetic recording media, comprising hollow globular silica particles at an amount of 0.01 to 1.0 % by weight based on the total weight of polyester film, said silica particles having a particle size distribution represented by the following equations I and II:

$$1.0 \leqq d_{90} / d_{10} \leqq 2.00 \qquad [I]$$

$$0.27 \leqq d_{50} \leqq 0.9 \qquad [II]$$

wherein $d_{10}$, $d_{90}$ and $d_{50}$ represent the particle sizes and where the cumulative weight of the particles are 10%, 90% and 50%, respectively, based on the total weight of the particles.

**Description**

BACKGROUND OF THE INVENTION

Field of the invention

The present invention relates, in general, to biaxially oriented polyester films and, more particularly, to biaxially oriented polyester films superior in abrasion resistance, slip property and surface roughness and suitable for magnetic recording media.

Description of the Prior Art

Polyester films are useful for a plurality of purposes including magnetic fields such as video tape, audio tape, computer tape and floppy disk, electric fields such as condenser and electrical insulating pipe, package field such as laminate film and metal vapor deposition film, and other fields such as micro film, X-ray film, design chart and stamping foil.

Recently, magnetic recording media have been rapidly been improving, which thus requires a high quality of base film. For example, magnetic tape such as video tape must employ a base film with a high recording density and a highly smooth surface.

It is well known that inactive inorganic particles, such as calcium carbonate, silica, alumina, zirconia, titanium dioxide and the like, are externally added to film in order to improve its process running property, slip property and abrasion resistance. Such particles must have sufficient mean sizes maintain the surface roughness of the film at the proper level. For example, if the particles used are too small, the surface roughness of the film is lower than the proper level, which in improves, for example, the electromagnetic transduction property of magnetic tape, but degrades the running property and generates a great deal of powder and scratches. On the other hand, if the particles used are too large diameter, the films run smoothly but rough aggregates are formed on the films, increasing the surface roughness, which deleteriously affects the electromagnetic transduction of magnetic tape, such as drop out.

Much effort has been made to solve the problems. In one effort, two species of particles with different sizes are used. However, it is difficult to make the particles uniform in shape and to confine the size distribution of the particles into a narrow range, the surface roughness becomes nonuniform and rough aggregates are generated in the film. Therefore, this conventional method has a strong possibility of failing to improve the running property and electromagnetic transduction.

SUMMARY OF THE INVENTION

It is an object of the present invention to overcome the above problems encountered in the prior arts and to provide a biaxially oriented polyester film for magnetic recording media with significantly improved abrasion resistance, slip property and surface roughness.

Based on the intensive and thorough research by the present inventors, it was found that hollow globular silica particles with fine pores have a strong affinity for polymer and can significantly reduce the voids generated around the particles upon stretching, thereby preventing the particles from being removed from the film.

Accordingly, in an aspect of the present invention, there is provided a biaxially oriented polyester film for magnetic recording media, comprising hollow globular silica particles at an amount of 0.01 to 1.0 % by weight based on the total weight of polyester film, said silica particles having a particle size distribution represented by the following equations I and II:

$$1.0 \leq d_{90} / d_{10} \leq 2.00 \qquad [I]$$

$$0.27 \leq d_{50} \leq 0.9 \qquad [II]$$

wherein $d_{10}$, $d_{90}$ and $d_{50}$ represent the particle sizes where the cumulative weights of the particles are 10%, 90% and 50%, respectively, based on the total weight of the particles.

In accordance with another aspect of the present invention, there is provided a biaxially oriented polyester film for magnetic recording media, comprising hollow globular silica particles at an amount of 0.01 to 1.0 % by weight based on the total weight of polyester film and other inorganic particles at half the weight of the silica particles, said silica particles having a particle size distribution represented by the equations I and II:

DETAILED DESCRIPTION OF THE INVENTION

The polyester useful in the present invention is prepared from aromatic dicarboxylic acid and/or the esters thereof, and alcohol, optionally in combination with third components.

Examples of aromatic dicarboxylic acid, one of the starting materials, include isophthalic acid, terephthalic acid, 2,6-naphthalene dicarboxylic acid, phthalic acid, adipic acid, and sebasic acid. These acid components may be used alone or in a combination of at least 2 species. The other starting material, an alcohol component, is selected from a group consisting of ethylene glycol, propylene glycol, butandiol, 1,4-cyclohexane dimethanol, neopentyl glycol and the mixture thereof, with ethylene glycol being preferrable.

Optionally, additives may be included in the polyester composition, including thermal stabilizer, anti-blocking agent, antioxidant, antistatic agent, uv absorbent and so on.

In accordance with the present invention, hollow globular silica particles with micropores are used for inducing proper surface roughness and electromagnetic transduction in the polyester film. Different from colloidal silica, such globular silica gives a distinctive method. In addition, since the hollow globular silica is derived from sodium silicate, inexpensive material, there is a cost advantage.

The hollow globular silica particles of the present invention have a particle size distribution described by particle diameter ratio r:

$$1 \leq r = d_{90} / d_{10} \leq 2$$

wherein $d_{10}$ and $d_{90}$ are the particle sizes where the cumulative weights of the particles are 10 and 90 % each, based on the total weight of the particles.

Silica particles having a distribution ratio within the range do not produce rough aggregates. If the ratio of hollow globular silica particles is above the upper limit, rough aggregates with a height of 0.75 μm or more are observed on the film surface by multiinterference microscope.

In accordance with the present invention, the hollow globular silica particles have mean sizes ranging from 0.27 to 0.9 μm and preferably from 0.45 to 0.72 μm and added in amount of 0.01 to 1.0 % by weight based on the total weight of polyester film and preferably 0.05 to 0.5 % by weight.

Addition of the hollow globular silica particles with a mean particle size of 1.5 μm or more in an amount more than 1.0 % by weight endows the polyester film with superior slip property but gives a great population of protrusions and depressions on the film surfaces. In the case of magnetic recording film, such protrusions and depressions cause a great deal of noise during recording.

On the other hand, if the content of the hollow globular silica particles in the polyester film is less than 0.01 % by weight, it shows a poor slip property owing to which a serious friction is generated between the film and the roll, leading to blocking and finally to a break in the film.

In the present invention, globular silica particles are slurried in ethylene glycol and filtered for use of polyester composition. Polymer obtained from such composition is melt-extruded at 270-300 °C, cooled at 40-70 °C and cured into amorphous film which is subsequently stretched 3.0-4.0 folds in the length direction and then 4.0-5.0 folds in the width direction. After being thermally treated at 200-240 °C, biaxially oriented polyester film is obtained. The stretch rate in width direction is larger than conventional ones. Thus, it is harder for the film of the present invention to flex in the width direction, which brings about improved scratch resistance and shear strength.

In accordance with the present invention, hollow globular silica particles may be used alone or in a combination with other inorganic particles, such as calcite cubic calcium carbonate particles, amorphous calcium carbonate particles and alumina oxide particles, the amount of which is preferably within 50 % by weight of the amount of silica particles.

When calcite cubic calcium carbonate or amorphous calcium carbonate particles are used, particles with average diameter of 1.2 to 5.0 times as large as that of the hollow globular silica and not more than 1.5 μm are preferred. For alumina oxide particles, the average diameter is not more than 0.5μm.

A better understanding of the present invention may be obtained in light of following examples which are set forth to illustrate, but are not to be construed to limit, the present invention.

In the following examples, the expression "part" means "weight part" and the physical properties were measured and defined as follows.

Average Diameter of Particles

A slurry of particles was measured for $d_{10}$, $d_{90}$ and $d_{50}$ with a particle size distribution meter such as that sold by Cyllas, France, under the trademark designation "Granulometer 850". $d_{50}$ was adopted as the average diameter.

## Running Property

When a film which had one end one end of which was loaded with 50 g ($T_2$) was wound around a soft chrome-plate metal roll (diameter 6 mm) at an angle of 180 ° (3.142 rad.($\Theta$)) at a speed of 1.1 m/sec, the resistance ($T_1$, g) was measured at the other end and the friction coefficient during running was calculated according to the following equation:

$$\mu k = 1 / \Theta \ln (T_1 / T_2) = 0.318 \ln (T_1 / 50)$$

## Surface Roughness (Ra)

Under the following conditions, measurements were carried out 20 times with a high precision three-dimensional surface roughness meter manufactured by Kosaka Institute, Japan, identified as "ET-10" and their average was taken.

- diameter at the end of needle : 0.5 $\mu$m
- weight of needle : 5 mg
- length of needle : 1 mm
- cut-off : 0.08 $\mu$m

## Abrasion Resistance

Using a Haidon surface meter, the film was run back and forth 200 times at a speed of 300 mm/min under a load of 500 g. Thereafter, level changes on the surface (slice level) were substituted in the following equation, to convert the change of the volume calculated by use of the height of particle as a diameter into abrasion percent.

$$\text{Abrasion} = \frac{\Sigma [(Ni^3 \times n) - (Ni'^3 \times n)]}{\Sigma [(Ni^3 \times n)]} \times 100$$

wherein

Ni : slice level prior to friction
Ni' : slice level after friction
n : number of each slice levels

Three of 5 measurements executed, deprived of the highest and lowest values, were averaged and, based on the average, abrasion resistance was determined as follows.

below 30 : very good (◎)
below 40 : good (O)
below 50 : average (◊)
50 or more : poor (♦)

## Scratch Resistance

A film was cut into a tape 0.5 inches wide. The resulting tape was subjected to a tension of 50 g and run 50 times on a tape guide pin (a stainless guide with Ra of 50 nm and Rt of 2500 nm) of a video cassette at a winding angle of 180° and at a speed of 1.1 m/sec in a tape running tester manufactured by Yokohama system institute Co. Ltd., Japan, identified as "TBT-300D/H TYPE". At that moment, the temperature was 20 °C and the RH 60%. The quantity of scratches generated was observed with an optical microscope and graded.

A grade : no scratch
B grade : a few scratches
C grade : abundant scratches

## Macroaggregates on Film

Using a multiinterference microscope, the number of macroaggregates higher than 0.75 $\mu$m in an area of 100 cm$^2$ was counted and the film was graded.

1st grade : 0
2nd grade : 1-2 ea.
3rd grade : 3-5 ea.
4th grade : 6-8 ea.
5th grade : 9 ea. or more

EXAMPLE I

100 parts of dimethyl terephthalate, 70 parts of ethylene glycol, 0.09 part of manganese acetate tetrahydrate and 0.04 part of antimony trioxide were placed in a reactor and heated to carry out ester interchange while draining methanol produced. Over 4 hours, the ester interchange was completed. After being added with 0.06 part of ethylene acid phosphate and 1.0 part of hollow globular silica particles, the reaction mixture was subjected to polycondensation for 4 hours to obtain polyester I.

A mix of polyester I 36% and particleless polyester polymer 64% was melt-extruded at 290 °C, cooled and cured to give an amorphous film which was then stretched 4-folds in the length direction at 120 °C and 4.5-folds in the width direction at 135 °C and thermally treated at 220 °C for 20 seconds, to produce a biaxially oriented polyester film 14.5 μm thick.

EXAMPLE II

Polyester II was prepared in a similar manner to that of Example I, except that, instead of hollow globular silica, 1.0 part of amorphous calcium carbonate particles with an average diameter of 0.6 μm was added.

A biaxially oriented polyester film was also similarly obtained using a mix of polyester I 12%, polyester II 48% and particleless polyester polymer 44%.

EXAMPLE III

Polyester III was prepared in a similar manner to that of Example I, except that, instead of a hollow globular silica, 1.0 part of calcite calcium carbonate particles which had an average diameter of 0.6 μm and a cubic length ratio of 1:1:1 was added.

A biaxially oriented polyester film was also similarly obtained using a mix of polyester I 12%, polyester II 43% and particleless polyester polymer 45%.

EXAMPLE IV

Polyester IV was prepared in a similar manner to that of Example I, except that, instead of a hollow globular silica, 1.0 part of aluminum oxide with an average diameter of 0.05 μm was added.

A biaxially oriented polyester film was also similarly obtained using a mix of polyester IV 12%, polyester I 12%, polyester III 32% and particleless polyester polymer 44%.

COMPARATIVE EXAMPLE I

Polyester V was prepared in a similar manner to that of Example I, except that, instead of a hollow globular silica, 1.0 part of colloidal silica with an average diameter of 0.5 μm was added.

A biaxially oriented polyester film was also similarly obtained using a mix of polyester V 36% and particleless polyester polymer 64%.

COMPARATIVE EXAMPLE II

A biaxially oriented polyester film was prepared in a similar manner to that of Comparative Example I except for using a mix of polyester V 12% and polyester II 48%.

COMPARATIVE EXAMPLE III

A biaxially oriented polyester film was prepared in a similar manner to that of Comparative Example I except for using a mix of polyester V 12% and polyester III 43%.

COMPARATIVE EXAMPLE IV

A biaxially oriented polyester film was prepared in a similar manner to that of Comparative Example I except for using a mix of polyester V 12%, polyester IV 12% and polyester III 32%.

The polyester films prepared in Example I through IV and Comparative Examples I through IV were tested for physical properties and the results are given as shown in Tables I and II below.

## TABLE I

| | No. of Examples | | | |
|---|---|---|---|---|
| | I | II | III | IV |
| __Hollow Globular Silica__ | | | | |
| Aver. Diameter($\mu$m) | 0.5 | 0.5 | 0.5 | 0.5 |
| Amount (wt%) | 0.36 | 0.12 | 0.12 | 0.12 |
| __Amorphous CaCO$_3$__ | | | | |
| Aver. Diameter($\mu$m) | | 0.6 | | |
| Amount (wt%) | | 0.48 | | |

## TABLE I-continued

| | No. of Examples | | | |
|---|---|---|---|---|
| | I | II | III | IV |
| **Calcite CaCO3** | | | | |
| Aver. Diameter(μm) | | | 0.7 | 0.7 |
| Amount (wt%) | | | 0.43 | 0.32 |
| Cubic length ratio | | | 1:1:1 | 1:1:1 |
| **Aluminum oxide** | | | | |
| Aver. Diameter(μm) | | | | 0.05 |
| Amount (wt%) | | | | 0.12 |
| **Physical Prop. of Film** | | | | |
| Friction coeff. (μk) | 0.23 | 0.22 | 0.24 | 0.19 |
| Surface Roughness (Ra) | 0.0164 | 0.0201 | 0.0195 | 0.0185 |
| Abrasion Resistance | ◎ | ○ | ◎ | ◎ |
| Scratch Resistance | A | A | A | A |
| Macroaggregate | 1 | 2 | 1 | 1 |

## TABLE II

| | No. of Comparative Examples | | | |
|---|---|---|---|---|
| | I | II | III | IV |
| **Colloidal Silica** | | | | |
| Aver. Diameter(μm) | 0.5 | 0.5 | 0.5 | 0.5 |
| Amount (wt%) | 0.36 | 0.45 | 0.12 | 0.12 |
| **Amorphous CaCO₃** | | | | |
| Aver. Diameter(μm) | | 0.6 | | |
| Amount (wt%) | | 0.48 | | |

## TABLE II-continued

| | No. of Comparative Examples | | | |
| --- | --- | --- | --- | --- |
| | I | II | III | IV |
| Calcite CaCO3 | | | | |
| Aver. Diameter(μm) | | | 0.7 | 0.7 |
| Amount (wt%) | | | 0.43 | 0.32 |
| Cubic length ratio | | | 1:1:1 | 1:1:1 |
| Aluminum oxide | | | | |
| Aver. Diameter(μm) | | | | 0.05 |
| Amount (wt%) | | | | 0.12 |
| Physical Prop. of Film | | | | |
| Friction coeff.   (μk) | 0.26 | 0.23 | 0.26 | 0.21 |
| Surface Roughness (Ra) | 0.0168 | 0.0212 | 0.0205 | 0.0193 |
| Abrasion Resistance | ○ | ◊ | ○ | ◎ |
| Scratch Resistance | B | B | B | A |
| Macroaggregate | 2 | 3 | 2 | 2 |

Other features, advantages and embodiments of the present invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

## Claims

1. A biaxially oriented polyester film for magnetic recording media, comprising hollow globular silica particles at an amount of 0.01 to 1.0 % by weight based on the total weight of polyester film, said silica particles having a particle size distribution represented by the following equations I and II:

$$1.0 \leq d_{90} / d_{10} \leq 2.00 \qquad [\text{I}]$$

$$0.27 \leq d_{50} \leq 0.9 \qquad [\text{II}]$$

wherein $d_{10}$, $d_{90}$ and $d_{50}$ represent the particle sizes where the cumulative weights of particles are 10%, 90% and 50%, respectively, based on the total weight of particles.

2. A biaxially oriented polyester film for magnetic recording media, comprising hollow globular silica particles at an amount of 0.01 to 1.0 % by weight based on the total weight of polyester film and other inorganic particles at half the weight of the silica particles, said silica particles having a particle size distribution represented by the following equations I and II:

$$1.0 \leq d_{90} / d_{10} \leq 2.00 \qquad \text{[I]}$$

$$0.27 \leq d_{50} \leq 0.9 \qquad \text{[II]}$$

wherein $d_{10}$, $d_{90}$ and $d_{50}$ represent the particle sizes where the cumulative weights of particles are 10%, 90% and 50%, respectively, based on the total weight of particles.

3.  A biaxially oriented polyester film in accordance with claim 1, wherein said hollow globular silica particles are prepared from sodium silicate.

4.  A biaxially oriented polyester film in accordance with claim 2, wherein said inorganic particles are selected from the group consisting of calcite cubic calcium carbonate, amorphous calcium carbonate, both having an average diameter of not more than 1.5 $\mu$m, and aluminum oxide having an average diameter of not more than 0.5 $\mu$m.

5.  A biaxially oriented polyester film in accordance with claim 4, wherein said calcium carbonate particles have an average diameter 1.2 to 5.0 times as large as that of said hollow globular silica particles.

**European Patent Office**

## EUROPEAN SEARCH REPORT

Application Number

EP 96 81 0028

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 257 611 (DIAFOIL CO LTD) 2 March 1988<br>* page 3, line 8 *<br>* page 4, line 21 - line 48 *<br>* page 10, line 7 - line 19 * | 1,2 | G11B5/704<br>G11B5/708<br>C08K3/00<br>C08K3/34<br>C08K3/36 |
| Y | * abstract * | 1-3 | C08K7/18 |
| Y | * page 6, line 43 *<br>* page 7, line 11 - line 12 *<br>* page 5, line 36 * | 4 | |
| | --- | | |
| X | EP-A-0 261 430 (TEIJIN LTD) 30 March 1988<br>* abstract *<br>* page 3, line 4 - line 11 * | 1,2 | |
| A | * page 6, line 38 - line 40 *<br>* page 8, line 11 - line 13 * | 5 | |
| | --- | | |
| Y | EP-A-0 453 276 (TEIJIN LTD) 23 October 1991<br>* page 3, line 38 * | 1,2 | |
| Y | * page 5, line 53 - line 57 * | 3 | |
| | --- | | |
| Y | HANS BREUER 'dtv-Atlas zur Chemie, Band 1, Allgemeine und anorganishe Chemie' 1994 , DEUTSCHER TASCHENBUCH VERLAG , MÜNCHEN<br>* page 107, left column, line BOTTOM * | 4 | TECHNICAL FIELDS SEARCHED (Int.Cl.6)<br><br>G11B<br>C08K |
| | --- | | |
| A | PATENT ABSTRACTS OF JAPAN vol. 013 no. 029 (C-562) ,23 January 1989 & JP-A-63 235336 (TEIJIN LTD) 30 September 1988,<br>* abstract * | 5 | |
| | --- | | |
| | -/-- | | |

The present search report has been drawn up for all claims

| Place of search | Date of completion of the search | Examiner |
|---|---|---|
| MUNICH | 23 April 1996 | Poth, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 96 81 0028

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 012 no. 439 (P-788) ,18 November 1988 & JP-A-63 168818 (TEIJIN LTD) 12 July 1988, * abstract * | 1,2 | |
| Y | --- | 3 | |
| X,P | US-A-5 427 730 (SON YOUNG H ET AL) 27 June 1995 * the whole document * | 1-4 | |
| X,P | --- US-A-5 397 828 (IHM DAE W ET AL) 14 March 1995 * abstract * | 1-4 | |
| X,P | --- DE-A-195 00 377 (CHEIL SYNTHETICS INC) 7 September 1995 * abstract * ----- | 1-4 | |
| | | | TECHNICAL FIELDS SEARCHED (Int.Cl.6) |

The present search report has been drawn up for all claims

| Place of search | Date of completion of the search | Examiner |
|---|---|---|
| MUNICH | 23 April 1996 | Poth, H |

EPO FORM 1503 03.82 (P04C01)